# EUROPÄISCHE PATENTSCHRIFT

(11) **EP 0 507 821 B1**
(45) Veröffentlichungstag und Bekanntmachung des Hinweises auf die Patenterteilung: **14.12.1994**
(21) Anmeldenummer: 91901740.0
(22) Anmeldetag: 17.12.1990
(51) Int. Cl.: C09D 167/08, C09D 179/02

(54) **WASSERVERDÜNNBARE BINDEMITTELGEMISCHE AUF BASIS VON ALKYDHARZEN**
WATER-DILUTABLE BINDER MIXTURES BASED ON ALKYD RESINS
MELANGE DE LIANTS DILUABLES A L'EAU A BASE DE RESINES ALKYDES

(30) Priorität: 27.12.1989 DE 3943112
(43) Veröffentlichungstag der Anmeldung: 14.10.1992
(73) Patentinhaber: Henkel Kommanditgesellschaft auf Aktien, 40191 Düsseldorf (DE)
(72) Erfinder: EICKEN, Ulrich, D-4000 Düsseldorf 13 (DE); HASE, Brigitte, D-4006 Erkrath (DE); GORZINSKI, Manfred, D-4000 Düsseldorf (DE); GRESS, Wolfang, D-5600 Wuppertal (DE); STORK, Norbert, D-4000 Düsseldorf (DE)
(86) Internationale Anmeldenummer: EP9002216
(87) Internationale Veröffentlichungsnummer: WO9109918

(56) Entgegenhaltungen:
- DE-A- 1 494 462
- DE-A- 3 428 204
- DE-A- 3 900 859
- DE-A- 3 932 375

## Beschreibung

Die Erfindung betrifft neue wasserverdünnbare Bindemittelgemische auf Basis von Alkydharzen und Poly-N-acylalkyleniminen sowie Verfahren zur Herstellung der neuen Bindemittelgemische und deren Verwendung in oxidativ trocknenden Anstrichmitteln.

Bei Lacken oder Anstrichmitteln unterscheidet man prinzipiell zwischen physikalisch trocknenden und chemisch trocknenden Systemen. Eine Form der chemisch trocknenden Anstrichmittel sind oxidativ trocknende Systeme, bei denen eine Vernetzungsreaktion durch Luftsauerstoff ausgelöst wird. Die heute wichtigsten oxidativ trocknenden Anstrichmittel enthalten Bindemittelgemische auf Basis von Alkydharzen, in die hoch ungesättigte Fettsäuren in Form gemischter Polyester einkondensiert sind. Für wasserverdünnbare Anstrichmittel werden Bindemittelgemische verwendet, die sogenannte selbstemulgierende Alkydharze enthalten, d.h. solche, die sich dank eingebauter hydrophiler Gruppen ohne Zusatz von Fremdemulgatoren in Wasser emulgieren lassen. Häufig werden als Bindemittelkomponente selbstemulgierende Alkydharze verwendet, in die Polyethylenglykol eingebaut wurde und deren Restsäuregruppen zumindest teilweise durch Basenzusatz neutralisiert worden sind. Die Herstellung wäßriger Dispersionen von derartigen Alkydharzen wird beispielsweise in der DE-PS 28 09 840, DE-PS 15 95 278 und der deutschen Patentanmeldung P 39 32 375.7 beschrieben. Jene wäßrigen Alkydharzdispersionen besitzen hervorragende Stabilitäten. Jedoch ergeben jene Alkydharzdispersionen, wenn sie als alleinige Bindemittelkomponente verwendet werden, wasserverdünnbare Anstrichmittel bzw. Überzüge, die in den Trocknungseigenschaften und in der Filmqualität besonders bezüglich der Filmhärte verbesserungsbedürftig sind.

Schnelltrocknende Filme mit gutem Glanz und hohen Härten liefern dagegen Anstrichmittel, deren Bindemittel auf Poly-N-acylalkyleniminen basieren, insbesondere auf solchen gemäß der deutschen Patentanmeldung P 39 00 859.2. Die dort verwendeten Poly-N-acylalkylenimine sind jedoch meist nur schlecht in Wasser emulgierbar. Eine akzeptable Emulgierbarkeit in Wasser kann nur erreicht werden, wenn Poly-N-acylalkylenimin-Gemische mit einem Anteil an Ethyloxazolin von über 50 Gew.% eingesetzt werden. Eine solche Bindemittelmischung ergibt jedoch Überzüge, die äußerst wasserempfindlich sind.

Aufgabe der vorliegenden Erfindung ist es daher, Bindemittelgemische zu finden, die die Vorteile der leichten Emulgierbarkeit der Alkydharze und der guten Trocknungseigenschaft und Filmqualität der Poly-N-acylalkylenimine aufweisen, sowie Verfahren zur Herstellung derartiger Bindemittelgemische und deren Verwendung in oxidativ trocknenden Anstrichmitteln.

Gegenstand der Erfindung sind somit wasserverdünnbare Bindemittelgemische, geeignet für oxidativ trocknende Anstrichmittel, auf Basis von Alkydharzen, in die Polyethylenglykol eingebaut und deren Restsäuregruppen zumindest teilweise durch Basenzusatz neutralisiert worden sind, dadurch gekennzeichnet, daß sie zusammen mit den Alkydharzen Poly-N-acylalkylenimine, hergestellt durch kationische Polymerisation von einem oder mehreren Monomeren der allgemeinen Formel I 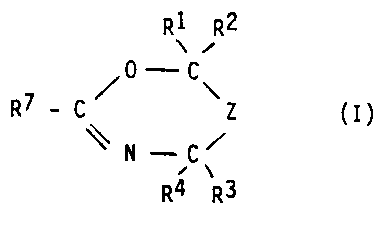
enthalten,
in der
- Z: eine direkte Bindung oder die Gruppe 〉CR⁵R⁶ darstellt, wobei R⁵ und R⁶ gleich oder verschieden sind und H oder Alkyl mit bis zu 2 C-Atomen bedeuten,
- R¹ bis R⁴: gleich oder verschieden sind und H, einen aromatischen oder aliphatischen Rest mit bis zu 8 C-Atomen bedeuten, und
- R⁷: einen über Kohlenstoff gebundenen aromatischen oder aliphatischen Rest mit bis zu 21 C-Atomen bedeutet.

Die erfindungsgemäßen Bindemittelgemische basieren auf Alkydharzen, die in an sich bekannter Weise aus ein- und mehrbasigen Carbonsäuren und/oder deren Anhydriden und aus mehrwertigen Alkoholen unter Mitverwendung von Polyethylenglykol hergestellt worden sind und eine Säurezahl zwischen 5 und 25 aufweisen.

Bevorzugt werden Alkydharze, die gemäß der deutschen Patentanmeldung P 39 32 375.7 herstellbar sind. Besonders hervorgehoben werden dort Alkydharze, die hergestellt worden sind aus:
- den mehrwertigen Alkoholen Trimethylolpropan und Pentaerythrit in Mengen von 20 bis 40 Gew.-%
- Fettsäuren oder Fettsäuregemischen in Mengen von 20 bis 45 Gew.-%, wobei die Fettsäuren mehr als 12 C-Atome besitzen und zumindest teilweise ungesättigt sein sollten
- aromatischen, einbasigen Carbonsäuren wie Benzoesäure und/oder deren Ringderivaten in Mengen bis zu 25 Gew.-% und
- aromatischen Dicarbonsäuren und/oder deren Anhydriden wie Phthalsäure(anhydrid) in Mengen von 20 bis 35 Gew.-%
unter Mitverwendung von Polyethylenglykol mit einem mittleren Molekulargewicht von 600 bis 6000 und in Mengen von über 5 und unter 15 Gew.-% - jede Komponente bezogen auf Alkydharz bildende Reaktantenmischung -.

Als besonders geeignet erwiesen sich Alkydharze, die aus ungesättigten Fettsäuren wie Erdnußöl-, Baumwollöl-, Sojaöl- und/oder Sonnenblumenölfettsäure und/oder Palmitolein-, Öl-, Linol-und/oder Linolensäuren und/oder Konjuenfettsäuren hergestellt worden sind. Desweiteren sind auch Alkydharze geeignet, die aus Ölen, vorzugsweise halbtrocknenden oder nichttrocknenden Öle wie Tungöl, Rizinusöl, Kokosnußöl, Distelöl und/oder die aus den oben genannten Fettsäuren ableitbaren Ölen hergestellt worden sind.

Die erfindungsgemäß bevorzugten Alkydharze besitzen ein mittleres Molekulargewicht zwischen 4000 und 7000.

Die Restsäuregruppen der Alkydharze werden zumindest anteilsweise durch Basenzusatz neutralisiert, vorzugsweise in Neutralisationsgraden über 50 % und insbesondere vollständig. Als Basen eignen sich alle dem Fachmann bekannten flüchtigen Amine wie Triethylamin, 2-Amino-2-Methylpropan-1-ol und/oder Ammoniak.

Die erfindungsgemäß bevorzugten Alkydharze weisen eine Restsäurezahl unter 25, bevorzugt zwischen 5 und 20 und insbesondere zwischen 10 und 15 auf, wobei in der Restsäurezahl sowohl freie als auch neutralisierte Restsäuregruppen erfaßt sind.

Erfindungsgemäß enthält das Bindemittelgemisch in Abmischung und/oder in Bindung mit den Alkydharzen Poly-N-acylalkylenimine, hergestellt durch kationische Polymerisation aus einem oder mehreren Monomeren der allgemeinen Formel I 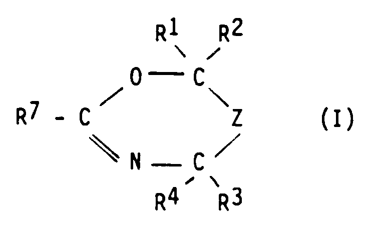
In den Monomeren der allgemeinen Formel I kann Z für eine direkte Bindung oder für die Gruppe 〉CR⁵R⁶ stehen, wobei R⁵ und R⁶ gleich oder verschieden sind und H oder Alkyl mit bis zu 2 C-Atomen bedeuten. Es können auch Mischungen von Monomeren der allgemeinen Formel I, in der Z die oben genannte Bedeutung hat, polymerisiert werden. Vorzugsweise enthalten die Mischungen Monomere der allgemeinen Formel I, in der Z für eine direkte Bindung steht, in Mengen über 50 Gew.-% und insbesondere in Mengen über 75 bis 100 Gew.-%.

Monomere der allgemeinen Formel I, in der Z für die Gruppe 〉CR⁵R⁶ steht, sind Sechsringe, die als Alkylderivate der in 5,6-Stellung gesättigten Oxazine aufzufassen sind. Monomere der allgemeinen Formel I, in der Z für eine direkte Bindung steht, sind Fünfringe, die als Alkylderivate der in 4,5-Stellung gesättigten Oxazole aufzufassen sind.

Die Herstellung solcher Monomere kann nach den üblichen Cyclisierungs- bzw. Kondensationsreaktionen für cyclische Iminoether erfolgen, wie sie z.B. nach der DE-PS 1445642 oder nach S. Kobayashi und T. Saegusa in "Ringopening-Polymerisation" Vol 2, London 1984, Seite 762 und folgende beschrieben sind.

In den Monomeren der allgemeinen Formel I können die Reste R1 bis R4 gleich oder verschieden sein und Wasserstoff und/oder aliphatische - zu denen hier definitionsgemäß die alicyclischen Verbindungen mitgezählt werden - und/oder aromatische Reste bedeuten. Vorzugsweise weisen die Monomere als Reste R¹ bis R⁴ Wasserstoff und/oder einen aliphatischen und/oder alicyclischen Rest mit bis zu 8 C-Atomen auf. Insbesondere werden als Reste R¹ bis R⁴ Wasserstoff und aliphatische Reste bis zu 3 C-Atomen bevorzugt. Bevorzugt im Rahmen der Erfindung sind solche Monomere der allgemeinen Formel I, in der wenigstens 2 der Reste R¹ bis R⁴ Wasserstoff bedeuten.

Ganz besonders geeignet sind solche Monomere, bei denen 3 der Reste R¹ bis R⁴ = H und einer der Reste ein Alkylrest mit bis zu 3 C-Atomen bedeuten oder bei denen alle Reste R¹ bis R⁴ Wasserstoffatome sind. Im Rahmen der Erfindung werden vor allem Monomere der allgemeinen Formel I bevorzugt, in der Z für eine direkte Bindung steht und die Reste R¹ bis R⁴ Wasserstoffatome sind. Dem Fachmann sind solche Monomere als 4,5-Dihydrooxazole bzw. als 2-Oxazoline bekannt. Die 2-substituierten Oxazoline sind ihrerseits beispielsweise aus den β-Chlorethylamiden oder aus den Ethanolamiden der entsprechenden Carbonsäuren oder Carbonsäuregemische durch Dehydrohalogenierung oder Dehydratisierung zugänglich.

Abgeleitet von der bevorzugten Darstellungsweise der Monomeren der allgemeinen Formel I aus Carbonsäuren oder Carbonsäuregemischen ergibt sich die Definition des Restes R⁷. Demnach ist in den Monomeren der allgemeinen Formel I der Rest R⁷ abgeleitet von einer aliphatischen oder aromatischen Carbonsäure R⁷-COOH mit bis zu 22 C-Atomen. Einer besonderen Ausführungsform der vorliegenden Erfindung entsprechend werden die Poly-N-acylalkylenimine hergestellt durch kationische Polymerisation von Monomeren unterschiedlicher Struktur. Bevorzugt werden Gemische von Monomeren der allgemeinen Formel I eingesetzt, die sich im Rest R⁷ unterscheiden, wobei R⁷ abgeleitet ist von aliphatischen und aromatischen Carbonsäuren R⁷-COOH. In einer besonders vorteilhaften Ausführungsform der vorliegenden Erfindung enthalten die Gemische der Monomere der allgemeinen Formel I zum Teil Monomere mit einem olefinisch ungesättigten aliphatischen Rest in R⁷. Dieser Rest ist vorzugsweise abgeleitet von einfach und/oder mehrfach ungesättigten Fettsäuren mit 16 bis 22 C-Atomen wie:
Palimtoleinsäure (9c-Hexadecensäure), Petroselinsäure (6c-Octadecensäure), Ölsäure (9c-Octadecensäure), Elaidinsäure (9t-Octadecensäure), Ricinolsäure (12-Hydroxy-9c-Octadecensäure), Linolsäure (9c,12c-Octadecadiensäure), Linolensäure (9c,12c,15c-Octadecatriensäure), Gadoleinsäure (9c-Eicosensäure), Arachidonsäure (5,8, 11,14-Eicosatetraensäure) und Erucasäure (13c-Docosensäure).

Für den anderen Teil der Monomere der allgemeinen Formel I steht R⁷ für einen Rest, der von aromatischen Carbonsäuren R⁷-COOH mit bis zu 22 C-Atomen abgeleitet ist. Als aromatische Carbonsäure sind insbesondere Benzoesäure und/oder deren Ringderivate geeignet.

Das Gemisch der Monomeren der allgemeinen Formel I kann ebenfalls Monomere enthalten, deren Rest R⁷ von einer gesättigten Carbonsäure R⁷-COOH mit bis zu 22 C-Atomen abgeleitet ist. Als gesättigte Carbonsäuren sind sowohl die niederen Carbonsäuren wie Essigsäure, Propionsäure und Capronsäure als auch die höheren wie Laurinsäure, Palmitinsäure, Stearinsäure, Isostearinsäure, 2-Ethylhexansäure, Cyclohexancarbonsäure, Myristinsäure und/oder Behensäure geeignet.

Zudem können die aromatischen und/oder aliphatischen Carbonsäuren R⁷-COOH bzw. die daraus ableitbaren Reste R⁷ zusätzlich solche Substituenten tragen, die wie Hydroxylgruppen, Ethergruppen, Estergruppen und Halogene die Polymerisation zu den Poly-N-acylalkyleniminen nicht stören.

Im Rahmen der Erfindung werden für die Herstellung der Poly-N-acylalkylenimine vorzugsweise Gemische von Monomeren der allgemeinen Formel I eingesetzt, die in Mengen von 25 bis 95 Gew.-%, bevorzugt von 50 bis 90 Gew.-% und insbesondere von 70 bis 90 Gew.-% Monomere enthalten, deren Rest R⁷ von einer ungesättigten Fettsäure abgeleitet ist und die in Mengen von 5 bis 50 Gew.-%, bevorzugt von 10 bis 30 Gew.-% Monomere enthalten, deren Rest R⁷ von Benzoesäure und/oder deren Ringderivate abgeleitet ist. Zusätzlich können in Mengen 0 bis zu 25 Gew.-% Monomere mit einem von einer gesättigten Carbonsäure abgeleiteten Alkylrest R⁷ enthalten sein. Alle Gew.-% beziehen sich in diesem Zusammenhang auf das Monomerreaktantengemisch. Höhere Mengen an den letztgenannten Monomeren sind möglich, verschlechtern allerdings die Trocknungsgeschwindigkeit. Insbesondere werden Gemische von Monomeren der allgemeinen Formel I bevorzugt, die keine Monomere enthalten, deren Rest R⁷ von einer gesättigten Carbonsäure abgeleitet ist.

Im Rahmen der Erfindung werden ganz besonders Gemische von Monomeren der allgemeinen Formel I bevorzugt, in denen Z für eine direkte Bindung steht und R¹ bis R⁴ Wasserstoffatome sind (die sog. 4,5-Dihydrooxazole) und die in Mengen von 25 bis 95 Gew.-%, vorzugsweise von 50 bis 90 Gew.-% und insbesondere über 70 Gew.-% Monomere enthalten, deren Rest R⁷ von einer der oben genannten Fettsäure abgeleitet ist, und die in Mengen von 5 bis 50 Gew.-%, vorzugsweise von 10 bis 30 Gew.-% Monomere enthalten, deren Rest R⁷ von Benzoesäure und/oder deren Ringderivate abgeleitet ist.

Die kationische Polymerisation der Monomere der allgemeinen Formel I kann praktisch bis zum vollständigen Umsatz zu Poly-N-acylalkyleniminen geführt werden. Die Zusammensetzung des Poly-N-acylalkylenimins wird durch die Wahl der Monomeranteile bestimmt. In der erfindungsgemäß bevorzugten Ausführungsform enthalten die Poly-N-acylalkylenimine die Monomere mit den verschiedenen Resten R⁷ in annähernd statistischer Verteilung.

Die Polymerisation kann mittels dem Fachmann bekannten kationischen Polymerisationsstartern wie Trifluormethansulfonsäuremethylester, Bortrifluoretherat und/oder Toluolsulfonsäuremethylester initiiert werden.

Die erfindungsgemäßen Bindemittelgemische enthalten Alkydharze in Mengen von 10 bis 90 Gew.-%, vorzugsweise von 50 bis 75 Gew.-% und Poly-N-acylalkylenimine in Mengen von 10 bis 90 Gew.-%, vorzugsweise von 25 bis 50 Gew.-%. Es ist aber auch möglich und kann je nach Anforderungen vorteilhaft sein, wenn die Bindemittelgemische zusätzlich weitere Bindemittel wie Polyurethane, Polyacrylate, Chlorkautschuk oder Nitrocellulose enthalten. Die weiteren Bindemittel können in maximalen Mischungsverhältnissen bis 1:1 neben der Alkydharz/Poly-N-acylalkylenimin-Kombination in den erfindungsgemäßen Bindemittelgemischen enthalten sein.

Ein weiterer Gegenstand der Erfindung sind Verfahren zur Herstellung der wasserverdünnbaren Bindemittelgemische. Im Rahmen der Erfindung werden zwei voneinander verschiedene Verfahren besonders bevorzugt. Im Verfahren A werden zunächst die Alkydharze, die Polyethylenglykol in Mengen unter 15 Gew.-% - bezogen auf Alkydharz bildendes Reaktantengemisch - und eine Restsäurezahl unter 25 aufweisen, in an sich bekannter Weise und insbesondere nach dem Verfahren der deutschen Patentanmeldung P 39 32 375.7 hergestellt. Unabhängig davon werden die Poly-N-acylalkylenimine durch kationische Polymerisation aus den bereits diskutierten Monomeren in an sich bekannter Weise und insbesondere nach der deutschen Patentanmeldung P 39 00 859.2 hergestellt.

Anschließend werden die Alkydharze und Poly-N-acylalkylenimine bei erhöhten Temperaturen, z. B. bei 100 °C bis 175 °C und bevorzugt in dem Bereich um 150 °C unter intensivem Rühren in Mischungsverhältnissen von Alkydharz : Poly-N-acylalkylenimin von 10 : 1 bis 1 : 10, vorzugsweise von 5 : 1 bis 1 : 5 und bevorzugt von 3 : 1 bis 1 : 1 miteinander vermischt. Das Vermischen kann auch in Gegenwart eines organischen Lösungsmittels durchgeführt werden, obgleich dies nicht bevorzugt ist. Erfindungsgemäß bevorzugt ist, daß nach Vermischung der Alkydharze mit den Poly-N-acylalkyleniminen das erhaltene Bindemittelgemisch eine Restsäurezahl unter 25, bevorzugt von 5 bis 20 und insbesondere von 10 bis 15 aufweist. Zeigt die Bindemittelmischung niedrigere Säurezahlen, so ist ein Nachsäuern der Mischung mit Dicarbonsäuren und/oder deren Anhydriden, die bereits bei der Herstellung der Alkydharze nach der deutschen Patentanmeldung P 39 32 375.7 genannt wurden, wie z.B. Maleinsäureanhydrid, Phthalsäureanhydrid, Bernsteinsäureanhydrid bevorzugt. Vorteilhafterweise erfolgt das Nachsäuern der Bindemittelmischung bei Temperaturen bis zu 150 °C, bevorzugt zwischen 100 °C bis 150 °C. Vermutlich bilden bei dem Nachsäuern die im Alkydharz noch vorhandenen freien Hydroxylgruppen mit den bevorzugten Anhydriden freie Säuregruppen. Sehr viel höhere Temperaturen als 150 °C, insbesondere Temperaturen über 200 °C sollten vermieden werden, da ansonsten die nach dem Nachsäuern entstandenen freien Fettsäuregruppen mit weiteren Hydroxylgruppen zu höheren Kondensaten reagieren können, was unerwünscht ist.

Die Neutralisation der Restsäuregruppen des Alkydharzes kann im Prinzip vor oder nach der Vermischung des Alkydharzes mit den Poly-N-acylalkyleniminen durch Zusatz der bereits besprochenen Basen erfolgen. Bei Nachsäuerung der Bindemittelmischung ist es vorteilhaft, die Neutralisation der Restsäuregruppen in einem und erst nach der Nachsäuerung durchzuführen.

Eine andere Möglichkeit zur Herstellung des Bindemittelgemisches liegt dem Verfahren B zugrunde. In dem erfindungsgamäßen Verfahren B erfolgt die Polymerisation der Monomeren der allgemeinen Formel I (Oxazine bzw. Oxazoline) im Alkydharz. Bereits bekannt ist die Polymerisation von Acrylsäure bzw. Methacrylsäure in einer wäßrigen Alkydharzdispersion, die in der DE-OS 31 32 937 beschrieben wird. Im Gegensatz dazu werden nach dem erfindungsgemäßen Verfahren die Monomere direkt im erwärmten Alkydharz, z. B. bei Temperaturen über 100 °C bis 200 °C, vorzugsweise über 130 bis 170 °C, nach Zusatz üblicher Polymerisationsstarter polymerisiert. Nach der erfindungsgemäß bevorzugten vollständigen oder nahezu vollständigen Polymerisation der Monomeren der allgemeinen Formel I im Alkydharz erhält man eine Bindemittelmischung, deren Säurezahl deutlich niedriger ist als durch reine Abmischung von Alkydharz mit Poly-N-acylalkylenimin zu erwarten ist. Anscheinend verbraucht die Polymerisation der Monomeren im Alkydharz einen Teil der Restsäuregruppen, so daß die Vermutung naheliegt, daß nach dieser Verfahrensvariante B die Poly-N-acylalkylenimine und/oder Teilstücke davon auf das Alkydharz gepfropft wurden. Die Bindungsverhältnisse an sich sind noch nicht geklärt. Auf jeden Fall ist es für die Emulgierbarkeit des Bindemittelgemisches von Vorteil, wenn nach der Polymerisation der Monomere im Alkydharz die Säurezahl der erhaltenen Bindemittelmischung durch Zugabe der bereits benannten Dicarbonsäuren und/oder deren Anhydriden zwischen 10 und 25 eingestellt wird. Das Nachsäuern erfolgt wie bereits bei Verfahren A beschrieben. Nach Einstellung der Säurezahl können die Restsäuregruppen des Bindemittelgemisches zumindest teilweise durch Zusatz der bereits beschriebenen Basen neutralisiert werden, bevorzugt in Neutralisationsgraden über 50 % und insbesondere vollständig.

Im Rahmen der Erfindung ist es bevorzugt sowohl das Verfahren A wie auch Verfahren B in Abwesenheit eines organischen Lösungsmittels durchzuführen, obgleich der Einsatz organischer Lösungsmittel möglich ist. Besonders geeignete Lösungsmittel sind vor allem hochsiedende organische Lösungsmittel.

Ein weiterer Gegenstand der Erfindung ist die Verwendung der Bindemittelgemische für oxidativ trocknende Anstrichmittel.

Die erfindungsgemäßen Bindemittelgemische werden dazu mittels Lösungsmittel in eine Bindemittel-Dispersion überführt. Als Lösungsmittel eignen sich Nasser und/oder in Nasser mischbare organische Lösungsmittel wie Aceton und/oder Butanon. Aus Umweltgründen wird bevorzugt Nasser in überwiegenden Mengen und insbesondere ausschließlich als Lösungsmittel eingesetzt.

In einer besonderen Ausführungsform werden die Bindemittelgemische zunächst in einem in Wasser mischbaren, organischen Hilfslösemittel gelöst und anschließend in Wasser dispergiert, bevor in bevorzugter Weise das Hilfslösemittel wieder abgetrennt wird.

Man erhält das Bindemittelgemisch in Form seiner Dispersion mit einem Bindemittel-Feststoffgehalt von 20 bis 60 Gew.-%, vorzugsweise von 30 bis 50 Gew.-% und insbesondere im Bereich von 35 bis 45 Gew.-%.

Die Dispersion des Bindemittelgemisches weist hervorragende Lagerstabilitäten auf und zeigt beispielsweise bei Temperaturen von 50°C nach 3 Monaten keine Koagulation.

Vorteilhaft wird das Bindemittelgemisch in Form seiner Dispersion in Mengen von 15 Gew.-% bis 50 Gew.-%, vorzugsweise von 20 bis 40 Gew.-% - berechnet als Feststoff und bezogen auf Anstrichmittel - in den Anstrichmitteln verwendet.

Der Dispersion des Bindemittelgemisches können Sikkative, Pigmente und ggf. andere übliche Additive zugesetzt werden, wodurch hervorragende oxidativ härtende Anstrichmittel entstehen, die bei kurzer Trocknungszeit Filme von hoher Qualität und großer Festigkeit ergeben.

Als Sikkative kommen alle dem Fachmann bekannten Verbindungen in Betracht, die vorzugsweise in Mengen von 0,01 bis 1 Gew.-%, bevorzugt in Mengen von 0,02 bis 0,06 Gew.-% - berechnet als Metall und bezogen auf Anstrichmittel - zugesetzt werden. Geringere Mengen als 0,01 Gew.-% Sikkative sind ebenfalls möglich, obgleich Anstrichmittel unter diesen Bedingungen nur langsam trocknende Überzüge ergeben. Zu den üblichen Additiven gehören Hilfsstoffe wie Füllstoffe, Reaktivverdünner, Hautverhinderungsmittel und/oder Verlaufsmittel, die in den für Anstrichmitteln üblichen Bereichen zugegeben werden, vorzugsweise von 0 bis 60 Gew.-%, insbesondere von 3 bis 40 Gew.-% - gezogen auf das Gesamtgewicht des Anstrichmittels.

### Beispiele

### A) Herstellung eines wasserdispergierbaren Alkydharzes:

### Beispiel 1

In einem 2-l-Dreihalskolben mit Stickstoffeinleitung, Rückflußkühler und Wasserabscheider wurden unter Rühren 281,0 g eines ungesättigten Fettsäuregemisches - bestehend aus 6 - 9 Gew.-% an gesättigen Fettsäuren mit 14 - 18 C-Atomen, 24 - 28 Gew.-% Ölsäure, 3 - 9 Gew.-% Linolsäure und 58 - 62 Gew.-% eines konjugiert ungesättigten Fettsäuregemisches mit 18 C-Atomen (Edenor^{(R)} UKD 6010) - mit 51,5 g Trimethylolpropan, 146,0 g Pentaerythrit und 224,0 g p.-tert. Butylbenzoesäure unter Anwesenheit von 100,0 ml Xylol und 2,0 g eines Veresterungskatalysators auf Zinnbasis (Swedcat 3 der Firma Swedstab) ca. 3 Stunden auf 200 °C erhitzt. Während der Reaktion wurden 41 ml Wasser als Kondensat abgeschieden.

Nach Abkühlung des Reaktionsgemisches wurden 146 g Pentaerythrit, 336 g Phthalsäureanhydrid und 106 g Polyethylenglykol mit einem mittleren Molekulargewicht von 3000 zugegeben und erneut erhitzt. Es wurden wiederum 39 ml Wasser als Kondensat abgeschieden.

Nach Erreichung einer Säurezahl von 11,2 wurde die Reaktion abgebrochen, und abschließend das Xylol im Vakuum entfernt.

### Beispiel 2

Die Durchführung des Beispiels 2 erfolgte analog zum Beispiel 1. Anstelle von 281,0 g des ungesättigten Fettsäuregemisches des Beispiels 1 wurden 280 g eines Fettsäuregemisches, das 8 Gew.-% an gesättigten Fettsäuren mit 14 bis 18 C-Atomen, 28 Gew.-% Ölsäure, 62 Gew.-% Linolsäure, 1 Gew.-% einer dreifach ungesättigten Fettsäure mit 18 C-Atomen und 1 Gew.-% einer Fettsäure mit über 18 C-Atomen enthielt (Edenor^{(R)}SbO₅, Henkel), eingesetzt.

### Beispiel 3

Die Durchführung des Beispiels 3 erfolgte analog zum Beispiel 2. Anstelle von 336 g Phthalsäureanhydrid wurden 377 g Isophthalsäure eingesetzt.

### Beispiel 4

Die Durchführung des Beispiels 4 erfolgte analog zu der des Beispiels 2. Die Mengen des ungesättigten Fettsäuregemisches des Beispiels 2 wurde von 281 g auf 560 g erhöht sowie die Menge der zugegebenen p.-tert.-Butylbenzoesäure von 224 g auf 46 g erniedrigt.

### Beispiel 5

Die Durchführung des Beispiels erfolgte analog Beispiel 1. Anstelle von 281,0 g des ungesättigten Fettsäuregemisches des Beispiels 1 wurden 281 g eines Fettsäuregemisches, das 10 Gew.-% an gesättigten Fettsäuren mit 12 bis 16 C-Atomen, 5 Gew.-% Palmitoleinsäure, 1 Gew.-% Margarinsäure, 2 Gew.-% Stearinsäure, 67 Gew.-% Ölsäure, 12 Gew.-% Linolsäure, 1 Gew.-% Linolensäure und 2 Gew.-% Fettsäuren mit über 18 C-Atomen enthielt (Edenor^{(R})FTiO₅, Henkel), eingesetzt.

### B) Herstellung der Polyoxazoline

Als Ausgangsmaterialien dienten in 2-Stellung substituierte Oxazoline, die überwiegend aus Carbonsäuren oder Carbonsäuremethylestern über die Hydroxyethylamide durch dehydratisierende Cyclisierung gemäß der älteren Anmeldung EP 88118090.5 hergestellt worden waren. Auch wenn dabei von Carbonsäuregemischen oder Methylestern von Carbonsäuregemischen ausgegangen worden war, war auf eine fraktionierte Destillation der Oxazoline verzichet worden, so daß die Reste R in den Oxazolinen in ihrer Zusammensetzung im wesentlichen mit den Zusammensetzungen in den Carbonsäure- oder Methylestergemischen übereinstimmten (Bestimmung durch Kapillar-Gaschromatographie). Im allgemeinen wurden Carbonsäuren oder Methylester in technischer Reinheit eingesetzt; die Zusammensetzung der verwendeten Oxazoline auf Basis von Fettsäuregemischen (bzw. Methylestergemischen) natürlichen Ursprungs ist in Tabelle 1 aufgeschlüsselt. Die in 2-Stellung arylsubstituierten 2-Oxazoline wie 2-Phenyl-2-oxazolin wurden nach dem Verfahren der DE 39 14 133 hergestellt.

**Tabelle 1**

| Oxazolin hergestellt auf Basis von | Gehalt an Oxazolinen | |
|---|---|---|
| | auf Basis von | Gewichts-% |
| Sojafettsäure (Edenor^{(R)} Sj, Henkel) | gesättigten Fettsäuren C₁₆-C₂₀ | 17 |
| | Ölsäure | 26 |
| | Linolsäure | 50 |
| | Linolensäure | 7 |
| Ricinolsäure (Edenor^{(R)} Ri 90, Henkel) | Palmitinsäure | 2 |
| | Stearinsäure | 1 |
| | Ölsäure | 5 |
| | Ricinolsäure | 88 |
| | Linolsäure | 4 |

### Beispiel 6

In einem 1 l Dreihalskolben, der mit Rührer und Rückflußkühler versehen war, wurden 380 g Oxazolin auf Basis von Sojafettsäure (1,25 mol) und 120 g (0,82 mol) Oxazolin auf Basis von Benzoesäure zusammen mit 2,4 g Trifluormethansulfonsäuremethylester unter Stickstoff erhitzt und 1 Stunde bei 160°C gerührt. Das Polymere erstarrte beim Abkühlen auf Raumtemperatur.

### Beispiel 7

Es wurden 121,6 g Oxazolin auf Basis von Sojafettsäure und 14,7 g Oxazolin auf Basis von Benzoesäure durch Zusatz von 0,65 g Trifluormethylsulfonsäuremethylester analog Beispiel 6 polymerisiert.

### Beispiel 8

Es wurden 60,8 g Oxazolin auf Basis von Sojafettsäure und 32,1 g Oxazolin auf Basis von Ricinolsäure sowie 29,4 g Oxazolin auf Basis von Benzoesäure unter Zusatz von 0,6 g Trifluormethansulfonsäuremethylester analog Beispiel 6 polymerisiert.

### C) Dispergierung

### Beispiel 9

100 g des Alkydharzes nach Beispiel 2 wurden zusammen mit 100 g des Polyoxazolins nach Beispiel 6 unter Rühren in 150 g Butanon aufgelöst. Die erhaltene klare Lösung wurde mit 2,7 g Triethylamin versetzt. Unter Rühren wurden 300 g entionisiertes Wasser zugegeben und anschließend das Butanon destillativ entfernt. Man erhielt eine feinteilige, stabile Emulsion mit einem 40 Gew.-%-igen Festgehalt an Polymeren.

### D) Polymerisation der Oxazoline im Alkydharz

### Beispiel 10

In einem 2 l Dreihalskolben, der mit Rührer und Rückflußkühler versehen war, wurden 500 g des Alkydharzes nach Beispiel 2 zusammen mit 378 g Oxazolin auf Basis von Sojafettsäure und 122 g Oxazolin auf Basis von Benzoesäure unter Stickstoffatmosphäre auf 120°C erwärmt. Nach Zugabe von 2,8 g Trifluormethansulfonsäuremethylester wurde die Temperatur auf 160°C erhöht und bei dieser Temperatur 1 Stunde gerührt.

Nach Abkühlung auf Raumtemperatur wurde unter Stickstoffatmosphäre 24,7 g festes Maleinsäureanhydrid zugefügt. Die Reaktionsmischung wurde erneut auf 150°C erwärmt und 1 Stunde lang gerührt.

Man erhielt ein Harz mit einer Säurezahl von 15. Dieses Harz wurde analog Beispiel 9 in Butanon gelöst, mit Triethylamin versetzt und in Wasser dispergiert.

### E) Herstellung eines Klarlacks

### Beispiel 11

100 g der nach einem der Verfahren C oder D hergestellten Dispersion wurden unter Rühren mit 0,15 g eines Sikkatives mit 8 Gew.-% an Cobalt (Servosyn WEB Co-Sikkativ) und 0,50 g eines Sikkatives mit 12 Gew.-% an Zirkon (Servosyn WEB Zr-Sikkativ) versetzt.

Es wurde ein Klarlack erhalten, der mit einer Spaltbreite von 100 µ gerakelt wurde.

Im folgenden werden die Pendelhärten nach König (DIN 53 157) der nach Beispiel 11 hergestellten Klarlacke, die auf verschiedenen Dispersionen beruhen, aufgeführt:
- Klarlack basierend auf Dispersionen, die nach Beispiel 9 aus gleichen Gewichtsanteilen an Alkydharz nach Beispiel 2 und Polyoxazolin nach Beispiel 6 hergestellt worden sind:
   1 Tag 23''; 7 Tage 46''; 14 Tage 63''; 50 Tage 105'';.
- Klarlack basierend auf Dispersionen, die nach Beispiel 9 aus gleichen Gewichtsanteilen an Alkydharz nach Beispiel 3 und Polyoxazolin nach Beispiel 6 hergestellt worden sind:
   1 Tag 28''; 7 Tage 49''; 14 Tage 69''; 50 Tage 112''.
- Klarlack basierend auf Dispersionen, die nach Beispiel 10 hergestellt worden sind:
   1 Tag 22''; 7 Tage 34'', 14 Tage 61'', 50 Tage 100''.

## Patentansprüche

1. Wasserverdünnbare Bindemittelgemische, geeignet für oxidativ trocknende Anstrichmittel, auf Basis von Alkydharzen, in die Polyethylenglykol eingebaut und deren Restsäuregruppen zumindest teilweise durch Basenzusatz neutralisiert worden sind, dadurch gekennzeichnet, daß sie zusammen mit den Alkydharzen Poly-N-acylalkylenimine, hergestellt durch kationische Polymerisation von einem oder mehreren Monomeren der allgemeinen Formel I 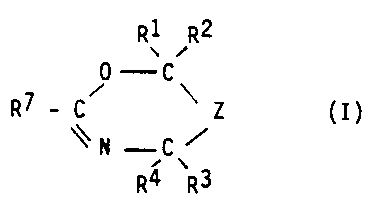 enthalten,
in der
Z eine direkte Bindung oder die Gruppe 〉 CR⁵R⁶ darstellt, wobei R⁵ und R⁶ gleich oder verschieden sind und H oder Alkyl mit bis zu 2 C-Atomen bedeuten,
R¹ bis R⁴ gleich oder verschieden sind und H, einen aromatischen oder aliphatischen Rest mit bis zu 8 C-Atomen bedeuten, und
R⁷ einen über Kohlenstoff gebundenen aromatischen oder aliphatischen Rest mit bis zu 21 C-Atomen bedeutet.

2. Bindemittelgemische nach Anspruch 1, dadurch gekennzeichnet, daß die im Bindemittelgemisch vorliegenden Poly-N-acylalkylenimine aus Monomeren der allgemeinen Formel I hergestellt worden sind, in der die Reste R¹ bis R⁴ gleich oder verschieden sind und dabei H oder Alkylreste mit bis zu 3 C-Atomen bedeuten und dabei wenigstens zwei der Reste -vorzugsweise 3 und insbesondere alle der Reste R¹ bis R⁴ -Wasserstoffatome bedeuten und dabei Z besonders bevorzugt für eine direkte Bindung steht.

3. Bindemittelgemische nach einem der Ansprüche 1 oder 2, dadurch gekennzeichnet, daß sie Poly-N-acylalkylenimine enthalten, die durch Polymerisation einer Mischung von unterschiedlichen Monomeren der allgemeinen Formel I hergestellt worden sind und die Mischung zumindest Monomere mit einem aromatischen Rest in R⁷ und Monomere mit einem olefinisch ungesättigten Rest in R⁷ enthält.

4. Bindemittelgemische nach einem der Ansprüche 1 bis 3, dadurch gekennzeichnet, daß die Poly-N-acylalkylenimine aus Monomeren der allgemeinen Formel I mit einem ungesättigten, aliphatischen Rest in R⁷ in Mengen von 25 bis 95 Gew.-%, bevorzugt von 50 bis 90 Gew.-% sowie Monomeren mit einem aromatischen Rest in R⁷ in Mengen von 5 bis 50 Gew.-%, bevorzugt von 10 bis 30 Gew.-% und ggf. aus Monomeren mit einem Alkylrest in R⁷ in Mengen bis zu 25 Gew.-% hergestellt worden sind.

5. Bindemittelgemische nach einem der Ansprüche 1 bis 4, dadurch gekennzeichnet, daß ihre Alkydharz-Komponente aus ein- und mehrbasigen Carbonsäuren und/oder deren Anhydriden und mehrwertigen Alkoholen unter Mitverwendung von Polyethylenglykol in Mengen unter 15 Gew.-% - bezogen auf Alkydharz bildendes Reaktantengemisch - hergestellt worden ist.

6. Bindemittelgemische nach einem der Ansprüche 1 bis 5, dadurch gekennzeichnet, daß die Restsäuregruppen ihrer Alkydharze zumindestens zu über 50 % neutralisiert sind und die Alkydharze eine Restsäurezahl über 5 und unter 25, vorzugsweise unter 20, - berechnet als freie und neutralisierte Carbonsäuregruppen - aufweisen.

7. Bindemittelgemische nach einem der Ansprüche 1 bis 6, dadurch gekennzeichnet, daß die Restsäuregruppen ihrer Alkydharze mit flüchtigen Basen, vorzugsweise flüchtigen Aminen und/oder Ammoniak wenigstens anteilsweise neutralisiert sind.

8. Bindemittelgemische nach einem der Ansprüche 1 bis 7, dadurch gekennzeichnet, daß sie neben den Alkydharzen und Poly-N-acylalkylenimine untergeordnete Mengen anderer Bindemittel enthalten, vorzugsweise aber davon frei sind.

9. Bindemittelgemische nach einem der Ansprüch 1 bis 8, dadurch gekennzeichnet, daß sie Alkydharze in Mengen von 10 bis 90 Gew.-%, vorzugsweise von 50 bis 75 Gew.-% abgemischt und/oder gebunden mit Poly-N-acylalkylenimine in Mengen von 10 bis 90 Gew.-%, vorzugsweise von 25 bis 50 Gew.-% - bezogen auf Bindemittelgemisch - enthalten.

10. Verfahren zur Herstellung der Bindemittelgemische nach einem der Ansprüche 1 bis 9, dadurch gekennzeichnet, daß die Alkydharze und Poly-N-acylalkylenimine unabhängig voneinander in an sich bekannter Weise hergestellt und anschließend miteinander vermischt werden, oder daß die Polymerisation der Monomere der allgemeinen Formel I in vorgelegtem Alkydharz zu Poly-N-acylalkyleniminen durchgeführt wird.

11. Verfahren zur Herstellung der Bindemittelgemische nach Anspruch 10, dadurch gekennzeichnet, daß die nach der Polymerisation der Monomeren im Alkydharz erhaltene Reaktionsmischung mit Dicarbonsäuren und/oder deren Anhydriden umgesetzt wird.

12. Verfahren zur Herstellung der Bindemittelgemische nach Anspruch 11, dadurch gekennzeichnet, daß Dicarbonsäuren und/oder deren Anhydride in solchen Mengen zur Reaktionsmischung gegeben werden, daß die Bindemittelmischung Restsäuregruppen aufweist, die der Säurezahl zwischen 5 und 25 entsprechen.

13. Verwendung der neuen Bindemittelgemische nach einem der Ansprüche 1 bis 9 für oxidativ, trocknende Anstrichmittel.

14. Verwendung der neuen Bindemittelgemische nach Anspruch 13, dadurch gekennzeichnet, daß sie in Form ihrer Dispersionen, vorzugsweise in Form ihrer wäßrigen Dispersion, verwendet werden.

15. Verwendung der neuen Bindemittelgemische nach einem der Ansprüche 13 und 14, dadurch gekennzeichnet, daß sie in Anstrichmitteln in Mengen von 15 Gew.-% bis 50 Gew.-%, vorzugsweise von 20 Gew.-% bis 40 Gew.-% - berechnet als Feststoff und bezogen auf Anstrichmittel - verwendet werden.

## Claims

1. Water-dilutable binder mixtures - suitable for oxidatively drying paints - based on alkyd resins in which polyethylene glycol is incorporated and of which the residual acid groups have been at least partly neutralized by addition of bases, characterized in that, together with the alkyd resins, they contain poly-N-acyl alkyleneimines prepared by cationic polymerization of one or more monomers corresponding to general formula I 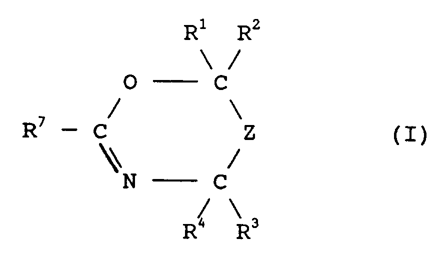 in which
Z is a direct bond or the group 〉CR⁵R⁶, where R⁵ and R⁶ may be the same or different and represent H or alkyl containing up to 2 carbon atoms,
R¹ to R⁴ may be the same or different and represent H, an aromatic or aliphatic radical containing up to 8 carbon atoms and
R⁷ is an aromatic or aliphatic radical containing up to 21 carbon atoms attached by carbon.

2. Binder mixtures as claimed in claim 1, characterized in that the poly-N-acyl alkyleneimines present in the binder mixtures have been produced from monomers corresponding to general formula I in which the substituents R¹ to R⁴ may be the same or different and represent H or alkyl radicals containing up to 3 carbon atoms, at least two of the substituents, preferably three of the substituents and, more preferably, all the substituents R¹ to R⁴ being hydrogen atoms, and Z is preferably a direct bond.

3. Binder mixtures as claimed in claim 1 or 2, characterized in that they contain poly-N-acyl alkyleneimines which have been produced by polymerization of a mixture of various monomers corresponding to general formula I and in that the mixture at least contains monomers with an aromatic substituent in R⁷ and monomers with an olefinically unsaturated substituent in R⁷.

4. Binder mixtures as claimed in any of claims 1 to 3, characterized in that the poly-N-acyl alkyleneimines have been produced from monomers corresponding to general formula I with an unsaturated aliphatic substituent in R⁷ in quantities of 25 to 95% by weight and preferably in quantities of 50 to 90% by weight and monomers with an aromatic substituent in R⁷ in quantities of 5 to 50% by weight and preferably in quantities of 10 to 30% by weight and, optionally, from monomers with an alkyl substituent in R⁷ in quantities of up to 25% by weight.

5. Binder mixtures as claimed in any of claims 1 to 4, characterized in that their alkyd resin component has been produced from monobasic and polybasic carboxylic acids and/or anhydrides thereof and polyhydric alcohols using polyethylene glycol in quantities below 15% by weight, based on the mixture of alkyd-resin-forming reactants.

6. Binder mixtures as claimed in any of claims 1 to 5, charaterized in that at least more than 50% of the residual acid groups of their alkyd resins are neutralized and the alkyd resins have a residual acid value above 5 and below 25 and preferably below 20, expressed as free and neutralized carboxylic acid groups.

7. Binder mixtures as claimed in any of claims 1 to 6, characterized in that the residual acid groups of their alkyd resins are at least partly neutralized with volatile bases, preferably volatile amines and/or ammonia.

8. Binder mixtures as claimed in any of claims 1 to 7, characterized in that, in addition to the alkyd resins and poly-N-acyl alkyleneimines, they contain small quantities of other binders, but are preferably free from such binders.

9. Binder mixtures as claimed in any of claims 1 to 8, characterized in that they contain alkyd resins in quantities of 10 to 90% by weight and preferably 50 to 75% by weight in admixture with and/or bonded to poly-N-acyl alkyleneimines in quantities of 10 to 90% by weight and preferably in quantities of 25 to 50% by weight, based on the binder mixture.

10. A process for the production of the binder mixtures claimed in any of claims 1 to 9, characterized in that the alkyd resins and the poly-N-acyl alkyleneimines are prepared independently of one another by methods known **per se** and are subsequently mixed together or in that the monomers corresponding to general formula I are polymerized in alkyd resin to form poly-N-acyl alkyleneimines.

11. A process for the production of the binder mixtures claimed in claim 10, characterized in that the reaction mixture obtained after polymerization of the monomers in the alkyd resin is reacted with dicarboxylic acids and/or anhydrides thereof.

12. A process for the production of the binder mixtures claimed in claim 11, characterized in that dicarboxylic acids and/or anhydrides thereof are added to the reaction mixture in such quantities that the binder mixture contains residual acid groups corresponding to the acid value of 5 to 25.

13. The use of the new binder mixtures claimed in any of claims 1 to 9 for oxidatively drying paints.

14. The use of the new binder mixtures claimed in claim 13, characterized in that they are used in the form of dispersions, preferably aqueous dispersions.

15. The use of the new binder mixtures claimed in claim 13 or 14, characterized in that they are used in paints in quantities of 15% by weight to 50% by weight and preferably in quantities of 20% by weight to 40% by weight, expressed as solids and based on paint.

## Revendications

1. Mélanges d'agents liants diluables à l'eau, appropriés pour des peintures qui sèchent par oxydation, à base de résines alkyde dans lesquels on a incorporé du polyéthylèneglycol et dont les groupes acides résiduels ont été neutralisés au moins partiellement par addition de bases, caractérisés en ce qu'ils renferment conjointement avec des résines alkyde, des poly-N-acylalcoylèneimines produites par polymérisation cationique d'un ou plusieurs monomères de formule générale I : 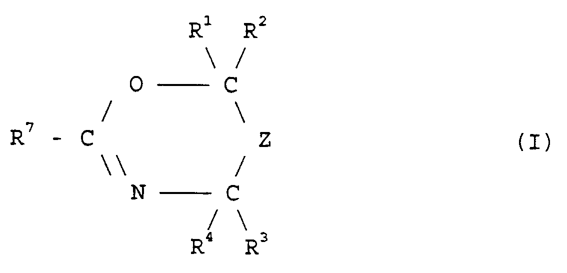 dans laquelle :
Z représente une liaison directe ou le groupe 〉CR⁵R⁶, dans lequel R⁵ et R⁶ sont identiques ou différents, et signifient H ou un alcoyle ayant jusqu'à 2 atomes de carbone,
R¹ à R⁴ sont identiques ou différents et signifient hydrogène, un radical aromatique ou aliphatique ayant jusqu'à 8 atomes de carbone, et
R⁷ et signifie un radical aliphatique ou aromatique lié par un carbone ayant jusqu'à 21 atomes de carbone.

2. Mélanges d'agents liants selon la revendication 1, caractérisés en ce que les poly-N-acylalcoylèneimines qui se trouvent dans le mélange d'agents liants ont été produits à partir de monomères de formule générale I, dans laquelle les radicaux R¹ à R⁴ sont identiques ou différents et signifient de l'hydrogène ou un radical alcoyle ayant jusqu'à 3 atomes de carbone et en outre au moins deux des radicaux- de préférence 3, et en particulier tous les radicaux R¹ à R⁴- signifient des atomes d'hydrogène et en outre Z de préférence représente une liaison directe.

3. Mélanges d'agents liants selon l'une des revendications 1 ou 2, caractérisés en ce qu'ils renferment des poly-N-acylalcoylèneimines qui ont été produits par polymérisation d'un mélange de monomères différents de formule générale I, et que le mélange contient au moins des monomères ayant un radical aromatique dans R⁷ et des monomères avec un radical non saturé oléfiniquement dans R⁷.

4. Mélanges d'agents liants selon l'une des revendications 1 à 3, caractérisés en ce que l'on a préparé des poly-N-acylalcoylèneimines à base de monomères de formule générale I avec un radical aliphatique non saturé dans R⁷, en quantités allant de 25 à 95 % en, poids, de préférence de 50 à 90 % en poids, ainsi que des monomères avec un radical aromatique dans R⁷ en quantités allant de 5 à 50 % en poids, de préférence de 10 à 30 % en poids et le cas échéant à base de monomères avec un radical alcoyle dans R⁷ en quantités allant jusqu'à 25 % en poids.

5. Mélanges d'agents liants selon l'une des revendications 1 à 4, caractérisés en ce que leur composant "résine alkyde" a été produit à partir d'acides carboxyliques uni- ou polybasiques et/ou de leurs anhydrides et alcools plurivalents avec utilisation conjointe de polyéthylèneglycol en quantités en dessous de 15 % en poids, rapporté au mélange de réactants qui forme la résine alkyde.

6. Mélanges d'agents liants selon l'une des revendications 1 à 5, caractérisés en ce que les groupes acides résiduels de leurs résines alkyde sont neutralisés au moins pour plus de 50 % et que les résines alkyde possèdent un indice d'acide résiduel au-dessus de 5 et en dessous de 25, de préférence en dessous de 20, calculé comme groupes d'acides carboxyliques libres et neutralisés.

7. Mélanges d'agents liants selon l'une des revendications 1 à 6, caractérisés en ce que les groupes acides résiduels de leurs résines alkyde sont neutralisés avec des bases volatiles, de préférence des amines volatiles et/ou de l'ammoniac, au moins partiellement.

8. Mélanges d'agents liants selon l'une des revendications 1 à 7, caractérisés en ce qu'ils contiennent à côté des résines alkyde et des poly-N-acylalcoylèneimines, des quantités inférieures d'autres agents liants, de préférence cependant ils en sont dépourvus.

9. Mélanges d'agents liants selon l'une des revendications 1 à 8, caractérisés en ce qu'ils renferment des résines alkyde en quantités allant de 10 à 90 % en poids, de préférence de 50 à 75 % en poids, en mélange et/ou en liaison avec des poly-N-acylalcoylèneimines en quantités allant de 10 à 90 % en poids de préférence de 25 à 50 % en poids, rapporté au mélange d'agents liants.

10. Procédé d'obtention des mélanges d'agents liants selon l'une des revendications 1 à 9, caractérisé en ce que les résines alkyde et les poly-N-acylalcoylèneimines sont produits indépendamment l'un de l'autre d'une manière connue en soi et ensuite sont mélangés l'un avec l'autre ou en ce que la polymérisation des monomères de formule générale I est effectuée dans de la résine alkyde introduite en poly-N-acylalcoylèneimines.

11. Procédé d'obtention des mélanges d'agents liants selon la revendication 10, caractérisé en ce que le mélange réactionnel obtenu après la polymérisation des monomères dans la résine alkyde, est mis à réagir avec des acides dicarboxyliques et/ou leurs anhydrides.

12. Procédé d'obtention des mélanges d'agents liants selon la revendication 11, caractérisé en ce que des acides dicarboxyliques et/ou leurs anhydrides sont ajoutés en quantités telles, au mélange réactionnel, que le mélange d'agents liants possède des groupes acides résiduels qui correspondent à un indice d'acidité compris entre 5 et 25.

13. Utilisation des nouveaux mélanges d'agents liants selon l'une des revendications 1 à 9, pour des peintures qui sèchent par oxydation;

14. Utilisation des nouveaux mélanges d'agents liants selon la revendication 13, caractérisée en ce qu'ils sont utilisés sous forme de leurs dispersions, de préférence sous forme de leur dispersion aqueuse.

15. Utilisation des nouveaux mélanges d'agents liants selon l'une des revendications 13 et 14, caractérisée en ce qu'ils sont utilisés dans les peintures en quantités allant de 15 % en poids à 50 % en poids, de préférence de 20 % en poids à 40 % en poids, calculé en tant que solide et rapporté à la peinture.
